# EUROPEAN PATENT SPECIFICATION

(11) **EP 4 578 780 B1**
(45) Date of publication and mention of the grant of the patent: **18.11.2026**
(21) Application number: 24223242.9
(22) Date of filing: 24.12.2024
(51) Int. Cl.: B64C 5/06, B64C 15/14, B64C 21/08, B64C 39/10, B64D 33/02

(54) **AIRCRAFT AIRFRAME COMPONENT WITH AIR SYSTEM**
FLUGZEUGFLUGWERKKOMPONENTE MIT LUFTSYSTEM
COMPOSANT DE CELLULE D'AÉRONEF AVEC SYSTÈME D'AIR

(30) Priority: 29.12.2023 US 202318400416
(43) Date of publication of application: 02.07.2025
(73) Proprietor: RTX Corporation, Farmington, CT 06032 (US)
(72) Inventor: Kupratis, Daniel B., Wallingford, 06492 (US); Hanrahan, Paul R., Sedona, 86351 (US); Mylrea, Benjamin T., Jupiter, 33458 (US)
(74) Representative: Dehns

(56) References cited:
- DE-A1- 2 430 406
- US-A- 4 391 424
- US-A1- 2015 083 866
- US-B2- 8 245 976

## Description

### BACKGROUND OF THE INVENTION

### 1. Technical Field

This invention relates to a system for an aircraft and, more particularly, to an airframe component of the aircraft such as a vertical stabilizer.

### 2. Background Information

An aircraft may include a vertical stabilizer at an aft, downstream end of the aircraft. Various types and configurations of aircraft and vertical stabilizers are known in the art. While these known aircraft and vertical stabilizers have various benefits, there is still room in the art for improvement.

US 8,245,976 B2 discloses a door assembly for a laminar flow control system.

### SUMMARY OF THE INVENTION

According to an aspect of the present invention, a system according to appended independent claim 1 is provided for an aircraft. This system includes a vane and an air system. The vane extends spanwise from a base to a tip. The vane extends longitudinally from a leading edge to a trailing edge. The vane extends laterally between a first side and a second side. The air system includes a first air circuit and a first door assembly. The first air circuit extends in the vane to a first circuit outlet at the first side. The first door assembly is arranged at the first circuit outlet. The air system is configured to exhaust a flow of air out of the first air circuit through the first circuit outlet during a first mode of operation and a second mode of operation. The first door assembly is configured to direct the flow of air exhausted from the first circuit outlet longitudinally towards the leading edge during the first mode of operation. The first door assembly is configured to direct the flow of air exhausted from the first circuit outlet longitudinally towards the trailing edge during the second mode of operation.

The following optional features may be applied to the above aspect in any combination falling within the scope of the appended claims.

The airframe may include a body and a vane projecting out from the body. The powerplant may be connected to the body. The first circuit outlet may be disposed in the vane.

The airframe may include a body. The powerplant may be connected to the body. The first circuit outlet may be disposed in the body downstream of the powerplant.

The first door assembly is configured to direct a first flow of air, exhausted from the first air circuit through the first circuit outlet, longitudinally towards the leading edge during a first mode of operation. The second door assembly may be configured to direct a second flow of air, exhausted from the second air circuit through the second circuit outlet, longitudinally towards the trailing edge during the first mode of operation. In addition, the first door assembly is configured to direct the first flow of air, exhausted from the first air circuit through the first circuit outlet, longitudinally towards the trailing edge during a second mode of operation. The second door assembly may be configured to direct the second flow of air, exhausted from the second air circuit through the second circuit outlet, longitudinally towards the leading edge during the second mode of operation.

The first door assembly is configured to direct a first flow of air, exhausted from the first air circuit through the first circuit outlet, longitudinally towards the leading edge during a mode of operation. The second door assembly may be configured to direct a second flow of air, exhausted from the second air circuit through the second circuit outlet, longitudinally towards the leading edge during the mode of operation.

The first door assembly is configured to direct a first flow of air, exhausted from the first air circuit through the first circuit outlet, longitudinally towards the trailing edge during a mode of operation. The second door assembly may be configured to direct a second flow of air, exhausted from the second air circuit through the second circuit outlet, longitudinally towards the trailing edge during the mode of operation.

During a mode of operation, the first door assembly may be configured to close the first circuit outlet and the second door assembly may be configured to close the second circuit outlet.

The first door assembly may be configured to block the first circuit outlet during a third mode of operation.

The first door assembly may include a first door extending longitudinally along the first side between an upstream end and a downstream end. The first door may be configured to laterally displace the upstream end from the first side during the first mode of operation. The first door may be configured to laterally displace the downstream end from the first side during the second mode of operation.

The first door assembly may include a first door. The first door may be configured to pivot about a first axis to enter the first mode of operation. The first door may be configured to pivot about a second axis to enter the second mode of operation. The second axis may be upstream of the first axis longitudinally along the first side.

The first door assembly may be disposed longitudinally along the first side closer to the trailing edge than the leading edge.

The system may also include an airframe, and the airframe may include a body and the vane connected to the body at the base. The first air circuit may extend within the airframe from a first circuit inlet to the first circuit outlet. The first circuit inlet may be arranged with the body.

The first circuit inlet may be laterally offset from the vane.

The body may be configured as a blended wing body.

The system may also include a first powerplant. The first powerplant may include a powerplant inlet and may be connected to the body. The circuit inlet may be disposed upstream of and may laterally overlap the powerplant inlet.

The first powerplant may be configured as a propulsion system for the aircraft.

The system may also include a second powerplant connected to the body. The vane may longitudinally overlap and may be disposed laterally between the first powerplant and the second powerplant.

The air system may include a second air circuit and a second door assembly. The second air circuit may extend in the vane to a second circuit outlet at the second side. The second door assembly may be arranged at the second circuit outlet. The air system may be configured to exhaust a second flow of air out of the second air circuit through the second circuit outlet during the first mode of operation and the second mode of operation. The second door assembly may be configured to direct the second flow of air exhausted from the second circuit outlet longitudinally towards the trailing edge during the first mode of operation. The second door assembly may be configured to direct the second flow of air exhausted from the second circuit outlet longitudinally towards the leading edge during the second mode of operation.

The second door assembly may be spanwise offset from the first door assembly along the vane.

The second door assembly may be longitudinally aligned with the first door assembly along the vane.

During a third mode of operation, the first door assembly may be configured to close the first circuit outlet and the second door assembly may be configured to close the second circuit outlet.

The air system may also be configured to exhaust the flow of air out of the first air circuit through the first circuit outlet during a third mode of operation. The first door assembly may be configured to direct the flow of air exhausted from the first circuit outlet longitudinally towards the leading edge during the third mode of operation. The air system may also be configured to exhaust the second flow of air out of the second air circuit through the second circuit outlet during the third mode of operation. The second door assembly may be configured to direct the second flow of air exhausted from the second circuit outlet longitudinally towards the leading edge during the third mode of operation.

The air system may also be configured to exhaust the flow of air out of the first air circuit through the first circuit outlet during a third mode of operation. The first door assembly may be configured to direct the flow of air exhausted from the first circuit outlet longitudinally towards the trailing edge during the third mode of operation. The air system may also be configured to exhaust the second flow of air out of the second air circuit through the second circuit outlet during the third mode of operation. The second door assembly may be configured to direct the second flow of air exhausted from the second circuit outlet longitudinally towards the trailing edge during the third mode of operation.

The present invention may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a plan view illustration of an aircraft.
FIG. 2 is a side view illustration of the aircraft.
FIG. 3 is a rear end view illustration of the aircraft.
FIG. 4A is a partial side view illustration of a section of the aircraft along a first side of a vertical stabilizer.
FIG. 4B is a partial side view illustration of a section of the aircraft along a second side of the vertical stabilizer.
FIGS. 5A-C are partial schematic sectional illustrations of the vertical stabilizer at various span locations.
FIG. 6 is a partial sectional illustration of a portion of the aircraft at an interface between an air circuit and a propulsion system.
FIG. 7 is a plan view illustration of a portion of the aircraft at the interface between the air circuit and the propulsion system.
FIGS. 8A-C are partial sectional illustrations of the vertical stabilizer with a door assembly in various positions.
FIGS. 9A-G are partial schematic sectional illustrations of the vertical stabilizer with an air system operating in various modes of operation, where each illustration includes an inner span section above an outer span section.
FIG. 10 is a partial rear end view illustration of the aircraft with another vertical stabilizer arrangement.
FIGS. 11A-G are partial schematic sectional illustrations of the vertical stabilizer of FIG. 10 with its air system operating in various modes of operation.
FIG. 12 is a partial rear end view illustration of the aircraft with multiple vertical stabilizers.
FIG. 13 is a plan view illustration of the aircraft with another air system arrangement.

### DETAILED DESCRIPTION

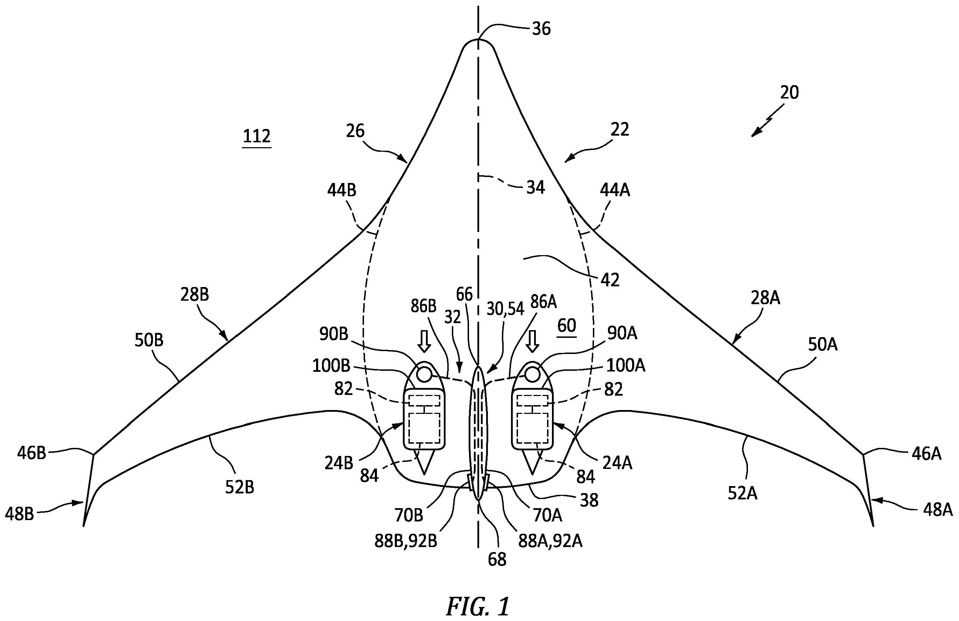

FIG. 1 illustrates a blended wing body (BWB) aircraft 20. This aircraft 20 includes an airframe 22 and one or more propulsion systems 24A and 24B (generally referred to as "24"). The aircraft airframe 22 includes a body 26 (e.g., a fuselage), one or more wings 28A and 28B (generally referred to as "28") and a vertical stabilizer 30. The aircraft 20 also includes an air system 32 for the vertical stabilizer 30.

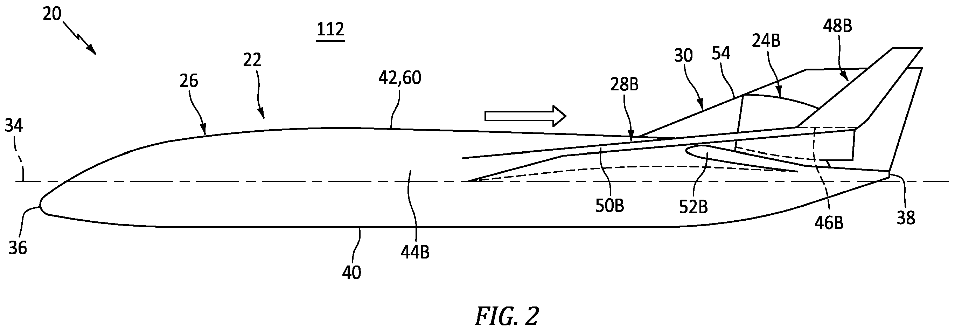

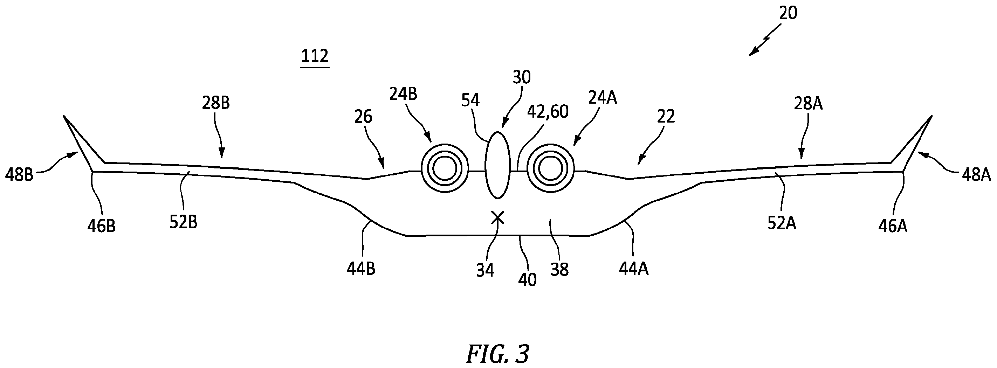

The aircraft body 26 extends longitudinally along a centerline 34 between and to a forward, upstream end 36 of the aircraft body 26 and an aft, downstream end 38 of the aircraft body 26. This centerline 34 may be a centerline axis of the aircraft 20, the aircraft airframe 22 and/or the aircraft body 26. Referring to FIG. 2, the centerline 34 may be substantially (e.g., within +/- five or ten degrees) or completely parallel with a horizon line when the aircraft 20 is flying in level flight. The aircraft body 26 extends vertically between and to opposing vertical bottom and top sides 40 and 42 of the aircraft body 26. The body bottom side 40 is vertically below the body top side 42 with respect to a gravitational direction when the aircraft 20 is flying in level flight. Referring to FIGS. 1 and 3, the aircraft body 26 extends laterally between and to opposing lateral sides 44A and 44B (generally referred to as "44") of the aircraft body 26.

The aircraft wings 28 of FIGS. 1 and 3 are arranged to the opposing lateral sides 44 of the aircraft body 26. Each of the aircraft wings 28 is connected to (e.g., fixed to) the aircraft body 26. Each of the aircraft wings 28A, 28B projects spanwise along a span line of the respective aircraft wing 28A, 28B out from the aircraft body 26, at the respective body lateral side 44A, 44B, to a distal tip 46A, 46B of the respective aircraft wing 28. At the wing tip 46A, 46B, the respective aircraft wing 28 may (or may not) be configured with a winglet 48A, 48B. Each of the aircraft wings 28 of FIG. 1 extends longitudinally along a mean line of the respective aircraft wing 28 from a leading edge 50A, 50B (generally referred to as "50") of the respective aircraft wing 28 to a trailing edge 52A, 52B (generally referred to as "52") of the respective aircraft wing 28. The wing leading edge 50 of FIG. 1, at a base of the respective aircraft wing 28, is longitudinally spaced aft, downstream from the body forward end 36. The wing trailing edge 52 of FIG. 1, at the wing base, is longitudinally spaced forward, upstream from the body aft end 38. The present invention, however, is not limited to such an exemplary aircraft wing arrangement.

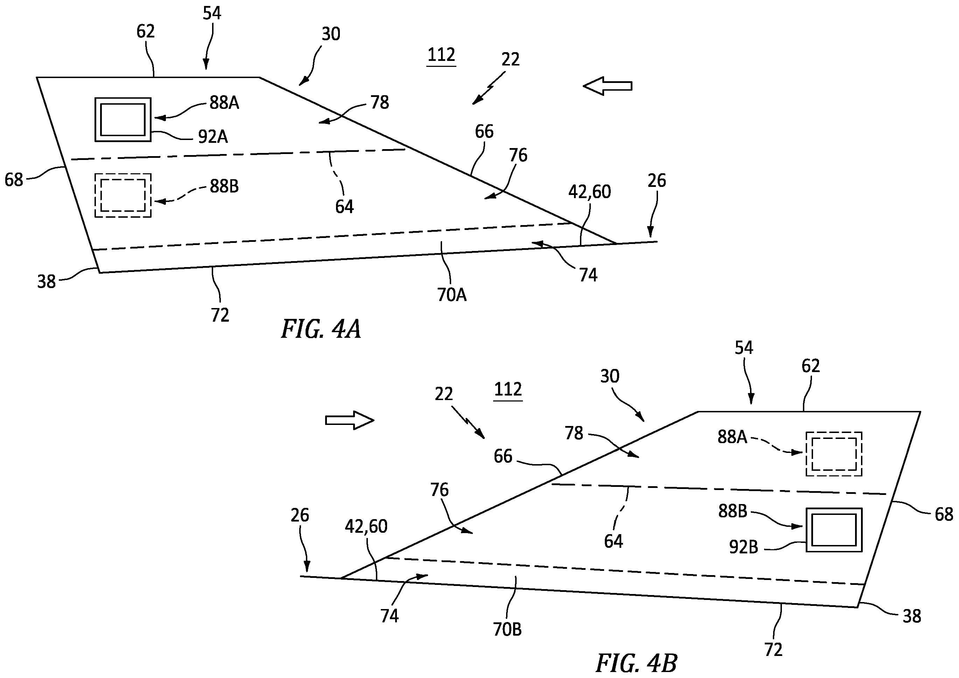

The vertical stabilizer 30 of FIGS. 1 and 3 is disposed along the body top side 42. This vertical stabilizer 30 is arranged laterally between the aircraft propulsion systems 24 longitudinally at (e.g., on, adjacent or proximate) the body aft end 38. Referring to FIGS. 4A and 4B, the vertical stabilizer 30 is configured as or may otherwise include a stationary vane 54.

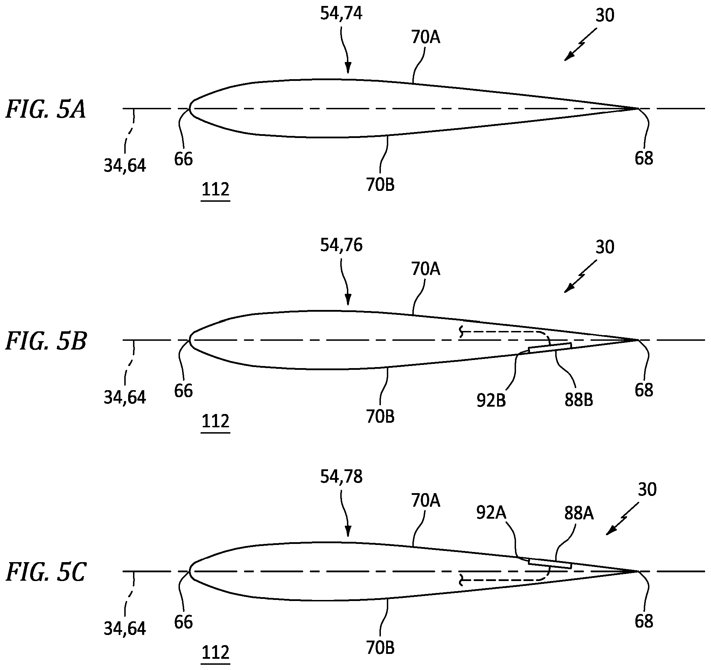

The vane 54 is connected to (e.g., fixed to) the aircraft body 26 at the body top side 42. This vane 54 projects spanwise along a span line of the vane 54 (e.g., vertically) away from the aircraft body 26 and its body top side 42. More particularly, the vane 54 of FIGS. 4A and 4B projects spanwise out from an exterior surface 60 (e.g., an outermost aero surface) of the aircraft body 26 at the body top side 42 to a distal tip 62 of the vane 54. The vane 54 extends longitudinally along a mean line 64 (e.g., a chord line where the vane 54 is symmetrical) of the vane 54 from a leading edge 66 of the vane 54 to a trailing edge 68 of the vane 54. Referring to FIGS. 5A-C, the vane 54 extends laterally (e.g., perpendicular to the mean line 64) between and to opposing lateral sides 70A and 70B (generally referred to as "70") of the vane 54. These vane lateral sides 70 extend longitudinally along the mean line 64 between and meet at the vane leading edge 66 and the vane trailing edge 68. Referring to FIGS. 4A and 4B, each of the vane elements 66, 68, 70A and 70B extends spanwise from a base 72 of the vane 54 at the body top side 42 to the vane tip 62.

The vane 54 of FIGS. 4A and 4B includes a base portion 74, an inner portion 76 and an outer portion 78. The base portion 74 may form a (e.g., complete) spanwise extending section of the vane 54 spanwise adjacent the aircraft body 26. The inner portion 76 may form a (e.g., complete) spanwise extending section of the vane 54 spanwise between the base portion 74 and the outer portion 78 of the vane 54. The inner portion 76 of FIGS. 4A and 4B, for example, extends spanwise from (or about) the base portion 74 to (or towards) the outer portion 78. The outer portion 78 may form a (e.g., complete) spanwise extending section of the vane 54 spanwise adjacent or near the vane tip 62. At one, some or all locations along each of the vane portions 74, 76, 78, referring to FIGS. 5A-5C, the vane mean line 64 of the respective vane portion 74, 76, 78 may be arranged parallel with the centerline 34. The vane mean line 64 may also be laterally aligned with the centerline 34. The present invention, however, is not limited to such an exemplary (e.g., zero-camber and/or zero stagger) vane arrangement.

Referring to FIG. 1, each of the aircraft propulsion systems 24 is connected to (e.g., fixed to) the aircraft body 26 at the body top side 42 and the body aft end 38. These aircraft propulsion systems 24 are arranged to the opposing lateral sides 70 of the vertical stabilizer 30 and its vane 54. The first propulsion system 24A of FIG. 1, for example, is spaced laterally from the vane 54 and its vane base 72 (see FIGS. 4A and 4B) at the vane first side 70A by a lateral first distance. The second propulsion system 24B of FIG. 1 is spaced laterally from the vane 54 and its vane base 72 (see FIGS. 4A and 4B) at the vane second side 70B by a lateral second distance, which may be equal to the first distance. The vane 54 may thereby be arranged laterally midway between the first propulsion system 24A and the second propulsion system 24B. The vane 54 of FIG. 1 may also longitudinally overlap a portion or an entirety of each aircraft propulsion system 24 along the centerline 34. The vane 54 thereby provides a divider (e.g., a structural barrier and/or a flow separator) laterally between the first propulsion system 24A and the second propulsion system 24B. This divider may reduce effects of crosswinds on the aircraft propulsion systems 24 and/or may prevent other disruptions associated with the aircraft propulsion systems 24 being in close proximity, such as reducing a likelihood of bird ingestion into both aircraft propulsion systems 24 as well as facilitating noise reduction (e.g., provide additional surfaces for acoustic attenuation). Here, the vane leading edge 66 of FIG. 1 is disposed longitudinally forward, upstream of each aircraft propulsion system 24 along the centerline 34.

Each aircraft propulsion system 24 of FIG. 1 is configured as a ducted rotor propulsion system. Examples of the ducted rotor propulsion system include, but are not limited to, a turbofan propulsion system and a turbojet propulsion system. Each aircraft propulsion system 24 of FIG. 1, for example, includes a ducted bladed rotor 82 (e.g., a fan rotor, a first stage compressor rotor, etc.) rotationally driven by an aircraft powerplant 84. This aircraft powerplant 84 may be configured as or otherwise include a turbine engine powered by traditional fuels or alternative fuels (e.g., sustainable aviation fuel, liquid hydrogen, etc.). Alternatively, the aircraft powerplant 84 may be configured as or otherwise include a rotary engine (e.g., a Wankel cycle engine), a hybrid-electric engine, or any other internal combustion (IC) engine or electric motor operable to drive rotation of the bladed rotor 82. The present invention, however, is not limited to the foregoing exemplary aircraft propulsion system and/or powerplant types or configurations. It is contemplated, for example, each aircraft propulsion system 24 may alternatively be configured as an open rotor propulsion system. Examples of the open rotor propulsion include, but are not limited to, a pusher fan propulsion system and a propfan propulsion system.

The air system 32 of FIG. 1 includes one or more air circuits 86A and 86B (generally referred to as "86") and one or more door assemblies 88A and 88B (generally referred to as "88"). For ease of description, the air circuits 86 are described below as fluidly discrete air circuits. The air circuits 86 of FIG. 1, for example, are not fluidly coupled together along their lengths. It is contemplated, however, the air circuits 86 may alternatively be fluidly coupled at one or more locations along their lengths in other embodiments.

Each air circuit 86A, 86B of FIG. 1 includes a circuit inlet 90A, 90B (generally referred to as "90") and a circuit outlet 92A, 92B (generally referred to as "92"). Each air circuit 86 extends within the airframe 22 from its respective circuit inlet 90 to its respective circuit outlet 92. An upstream section of each air circuit 86 of FIG. 1, for example, extends within the aircraft body 26 from its respective circuit inlet 90 to a downstream section of the respective air circuit 86. The downstream section of each air circuit 86 of FIG. 1 extends within the vane 54 from the respective upstream section of the respective air circuit 86 to its respective circuit outlet 92.

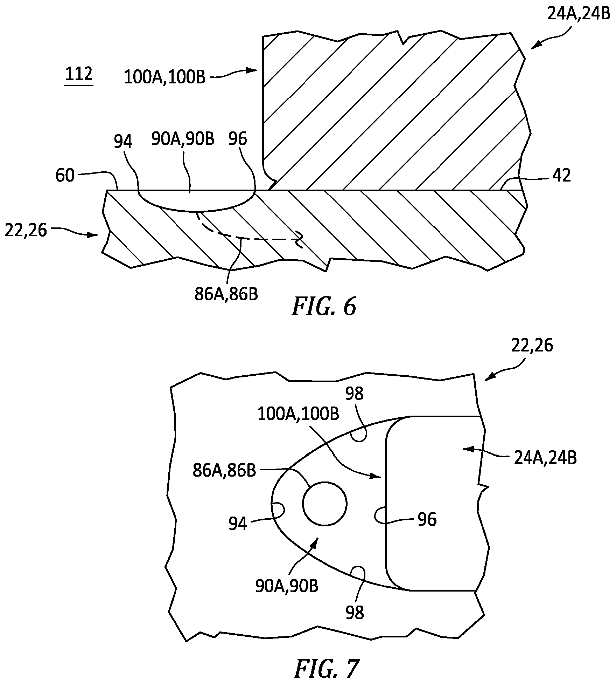

Each circuit inlet 90 is arranged with the aircraft body 26. Referring to FIG. 6, each circuit inlet 90 may be configured as a recess such as a dimple, a depression, a channel, a notch or the like in the aircraft body 26. The circuit inlet 90 of FIG. 6, for example, projects partially vertically into the aircraft body 26 from the body exterior surface 60. The circuit inlet 90 of FIG. 6 extends longitudinally within the aircraft body 26 and its body exterior surface 60 between opposing longitudinal ends 94 and 96 of the circuit inlet 90. The circuit inlet 90 of FIG. 7 extends laterally within the aircraft body 26 and its body exterior surface 60 between opposing lateral sides 98 of the circuit inlet 90. The present invention, however, is not limited to such an exemplary circuit inlet configuration. Each circuit inlet 90, for example, may alternatively be configured as a scoop which projects vertically out from the aircraft body 26 and its exterior surface 60. In another example, each circuit inlet 90 may be configured as a flush mount scoop such as a NACA type inlet.

Referring to FIG. 1, each circuit inlet 90 is laterally offset (e.g., located remote) from the vertical stabilizer 30 and its vane 54. The first circuit inlet 90A of FIG. 1, for example, is disposed to the vane first side 70A and laterally spaced from the vane 54 and its vane first side 70A by a lateral first distance. This first distance may be selected such that the first circuit inlet 90A is disposed upstream of an airflow inlet 100A into the first propulsion system 24A and its powerplant 84. The first circuit inlet 90A of FIG. 1, for example, laterally overlaps (e.g., is laterally aligned with) the first propulsion system 24A and its airflow inlet 100A; see also FIG. 7. Similarly, the second circuit inlet 90B of FIG. 1 is disposed to the vane second side 70B and laterally spaced from the vane 54 and its vane second side 70B by a lateral second distance. This second distance may be selected such that the second circuit inlet 90B is disposed upstream of an airflow inlet 100B into the second propulsion system 24B and its powerplant 84. The second circuit inlet 90B of FIG. 1, for example, laterally overlaps (e.g., is laterally aligned with) the second propulsion system 24B and its airflow inlet 100B; see also FIG. 7.

Each circuit outlet 92 of FIG. 1 is arranged with the vertical stabilizer 30 and its vane 54. Each circuit outlet 92A, 92B of FIG. 1, for example, is arranged in and along a respective one of the vane sides 70A, 70B. More particularly, the circuit outlets 92A and 92B are arranged to the opposing lateral sides 70A, 70B of the vane 54. For example, referring to FIGS. 4A and 5C, the first circuit outlet 92A is arranged along the vane first side 70A in the outer portion 78. Referring to FIGS. 4B and 5B, the second circuit outlet 92B is arranged along the vane second side 70B in the inner portion 76. With this arrangement, the first circuit outlet 92A (see FIG. 4A) is located radially outboard of the second circuit outlet 92B (see FIG. 4B) along the span of the vane 54.

Referring to FIGS. 4A and 4B, the circuit outlets 92 may be longitudinally aligned along the vane 54 and/or the centerline 34 (see also FIG. 1). Each circuit outlet 92A, 92B may be disposed longitudinally along the respective vane side 70A, 70B closer to the vane trailing edge 68 than the vane leading edge 66. Each circuit outlet 92A, 92B of FIG. 4A, 4B, for example, may be located along a downstream most (e.g., one-half, one-third, one-quarter) section of the respective vane side 70A, 70B towards the vane trailing edge 68.

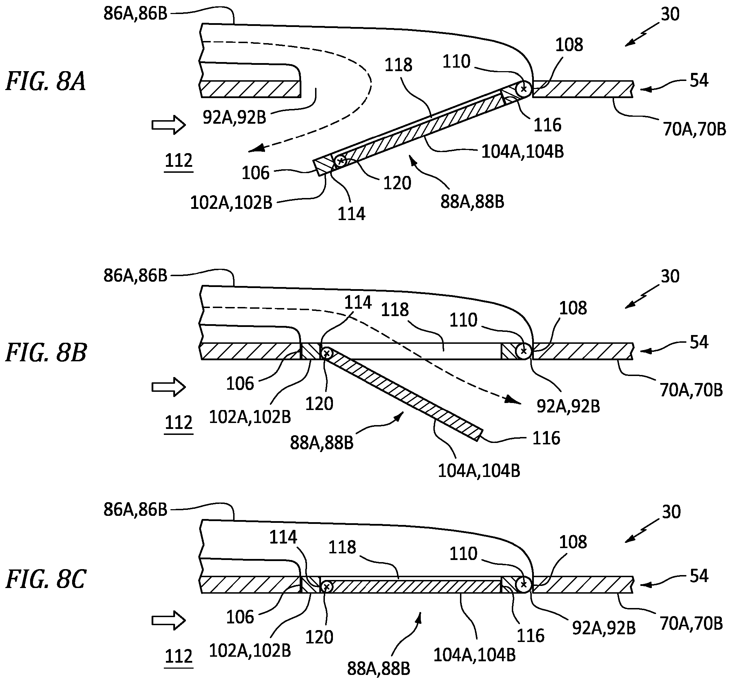

Referring to FIG. 5B, 5C, each door assembly 88A, 88B is arranged at a respective one of the circuit outlets 92A, 92B. Referring to FIGS. 8A-C, each door assembly 88 may be configured as a multi-pivot axis door. Each door assembly 88A, 88B of FIGS. 8A-C, for example, includes an outer door 102A, 102B (generally referred to as "102") and an inner door 104A, 104B (generally referred to as "104").

The outer door 102 extends longitudinally between and to a forward, upstream end 106 of the outer door 102 and an aft, downstream end 108 of the outer door 102. This outer door 102 is arranged with (e.g., seated in or disposed adjacent) a respective one of the circuit outlets 92A, 92B along a respective one of the vane sides 70A, 70B. The outer door 102 is moveably mounted to the vane 54. The outer door 102 of FIGS. 8A-C, for example, is pivotally mounted to an internal support structure of the vane 54 at (or near) the outer door downstream end 108. With this arrangement, the outer door 102 is configured to pivot about a downstream pivot axis 110 of the respective door assembly 88 (and/or otherwise move) between a (e.g., fully) closed / stowed position of FIG. 8C (see also FIG. 8B) and an (e.g., fully) open / deployed position of FIG. 8A. Here, the outer door upstream end 106 is displaced laterally outward away from the respective vane side 70A, 70B and projects laterally into an environment 112 external to the vertical stabilizer 30 and its vane 54.

The inner door 104 extends longitudinally between and to a forward, upstream end 114 of the inner door 104 and an aft, downstream end 116 of the inner door 104. This inner door 104 is arranged with (e.g., seat in or disposed adjacent) a port 118 in the respective outer door 102. The inner door 104 is moveably mounted to the respective outer door 102. The inner door 104 of FIGS. 8A-C, for example, is pivotally mounted to the respective outer door 102 at (or near) the inner door upstream end 114. The outer door 102 may thereby form a frame for and extend around the inner door 104, which frame couples the inner door 104 to the vane 54 at a respective one of the circuit outlets 92A, 92B along a respective one of the vane sides 70A, 70B. With this arrangement, the inner door 104 is configured to pivot about an upstream pivot axis 120 of the respective door assembly 88 (and/or otherwise move) between a (e.g., fully) closed / stowed position of FIG. 8C (see also FIG. 8A) and an (e.g., fully) open / deployed position of FIG. 8B. Here, the inner door downstream end 116 is displaced laterally outward away from the respective vane side 70A, 70B (and the respective outer door 102) and projects laterally into the external environment 112. The upstream pivot axis 120 may be parallel with and spaced longitudinally from the downstream pivot axis 110.

Referring to FIGS. 8A-C, each door assembly 88 is configured to regulate (e.g., open, meter, close) airflow exhausted from the respective circuit outlet 92 into the external environment 112. Each door assembly 88 is also configured to guide (e.g., direct) the airflow exhausted from respective circuit outlet 92 into the external environment 112. For example, the outer door 102 may move from its closed position of FIG. 8C (or from the position illustrated in FIG. 8B) to its open position of FIG. 8A to open (e.g., uncover) the respective circuit outlet 92. Here, the inner door 104 may remain in its closed position (or be moved to its closed position) and, thus, move (e.g., pivot) with the respective outer door 102 to the arrangement of FIG. 8A. With this arrangement of FIG. 8A, the respective door assembly 88 and its doors 102 and 104 are configured to guide (e.g., direct) the airflow exhausted from the respective circuit outlet 92 along a forward, upstream trajectory; e•g- longitudinally towards the vane leading edge 66 of FIG. 5B, 5C. In another example, the inner door 104 may move from its closed position of FIG. 8C (or from the position illustrated in FIG. 8A) to its open position of FIG. 8B to open (e.g., uncover) the respective circuit outlet 92 via the respective outer door port 118. Here, the outer door 102 may remain in its closed position (or be moved to its closed position). With this arrangement of FIG. 8B, the respective door assembly 88 and inner door 104 are configured to guide (e.g., direct) the airflow exhausted from the respective circuit outlet 92 along an aft, downstream trajectory; e•g- longitudinally towards the vane trailing edge 68 of FIG. 5B, 5C. In still another example, the outer door 102 and/or the inner door 104 may each move to its closed position of FIG. 8C to block (e.g., obstruct) flow through the respective circuit outlet 92. In the closed arrangement of FIG. 8C, the door assembly 88 may be configured to substantially or completely fluidly decouple the respective air circuit 86 from the exterior environment 112. Though illustrated as transitioning from a closed position of FIG. 8C to an open position of either FIG. 8A or 8B, in embodiments not presently being claimed the outer door 102 may be configured to only move to one of the illustrated open positions. That is, in such examples, the outer door 102 may be configured to transition between the closed position of FIG. 8C to the open position of FIG. 8A or the open position of FIG. 8B, but not both. In such examples, the outer door may be activated by either a downstream pivot axis 110 or an upstream pivot axis 120, but not both.

During operation of the air system 32 of FIG. 1, each circuit inlet 90 may receive boundary layer air flowing along a respective upstream portion of the body exterior surface 60. This boundary layer air is directed into the respective air circuit 86 through its circuit inlet 90. The air flows through each air circuit 86 to its respective circuit outlet 92 where that air is exhausted from the air system 32 into the external environment 112 through the respective circuit outlet 92 and the respective open door assembly 88 (e.g., see FIG. 8A or 8B). By removing the boundary layer air upstream of the aircraft propulsion systems 24, each aircraft propulsion system 24 may receive a substantially free stream of air (e.g., clean air, low turbulence air, etc.) at its airflow inlet 100. By placing the circuit outlets 92A and 92B along the vane sides 70A and 70B, movement of air within the external environment 112 along the vane 54 may facilitate a pumping effect of the air through the air circuits 86. With this arrangement, the air system 32 operates as a passive air system. The air system 32, for example, utilizes the flow of air along the aircraft 20 within the external environment 112 to power its operation. By contrast, an active air system may utilize a pump or a compressor to boost or facilitate air flow.

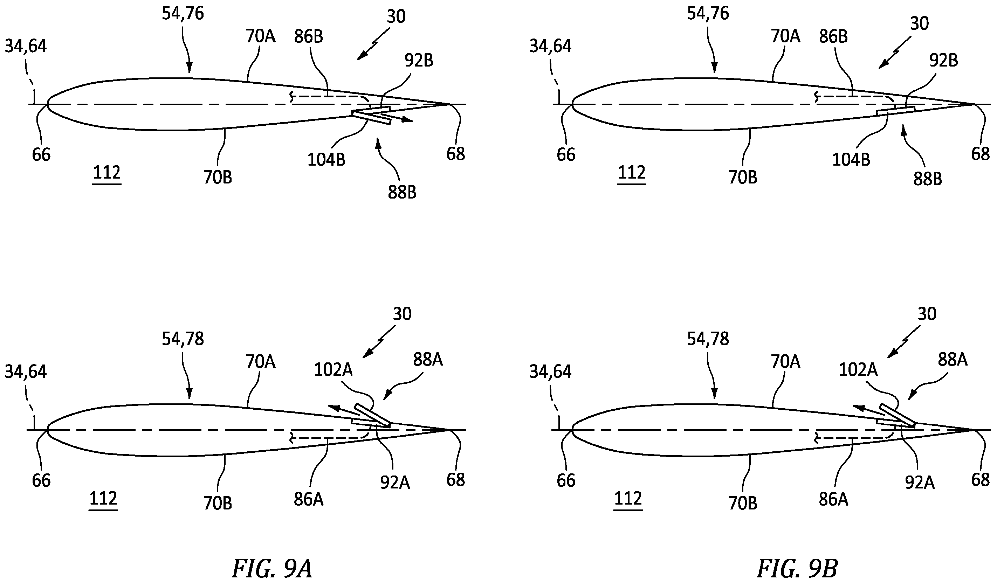

Exhausting the air from one or more of the circuit outlets 92A and 92B may also be utilized to facilitate aircraft maneuvering and/or alter aircraft performance during flight. The air system 32, for example, may be operated in various modes of operation, some of which operating modes are schematically exemplified in FIGS. 9A-G.

Referring to FIG. 9A, during a first (e.g., starboard, right side) yaw mode of operation, the outer door 102A of the first door assembly 88A may be moved to its open position (see also FIG. 8A) and the inner door 104B of the second door assembly 88B may be moved to its open position (see also FIG. 8B). Here, the air exhausted from the first circuit outlet 92A is forward, upstream of the air exhausted from the second circuit outlet 92B. The air exhausted from the first circuit outlet 92A therefore initially may flow along a portion of the vane 54 with a greater lateral thickness than the air exhausted from the second circuit outlet 92B. Moreover, the air exhausted from the first circuit outlet 92A is (at least initially) directed in the forward, upstream direction by the first door assembly 88A and the air exhausted from the second circuit outlet 92B is directed in the aft, downstream direction (e.g., generally along the vane second side 70B) by the second door assembly 88B. With this arrangement, the air exhausted from the first circuit outlet 92A may push air within the external environment 112 further laterally away from the vane 54 than the air exhausted from the second circuit outlet 92B. The air exhausted from the first circuit outlet 92A may thereby increase an effective camber of the outer portion 78 of the vane 54. This increase in the effective camber may generate additional lift to the second lateral direction such that the aircraft 20 yaws to the starboard; e.g., without use of a traditional physical rudder, such as to trim the aircraft 20 in the yaw axis. In some embodiments, referring to FIG. 9B, this effect may be increased by moving the second door assembly 88B to its closed position (see also FIG. 8C).

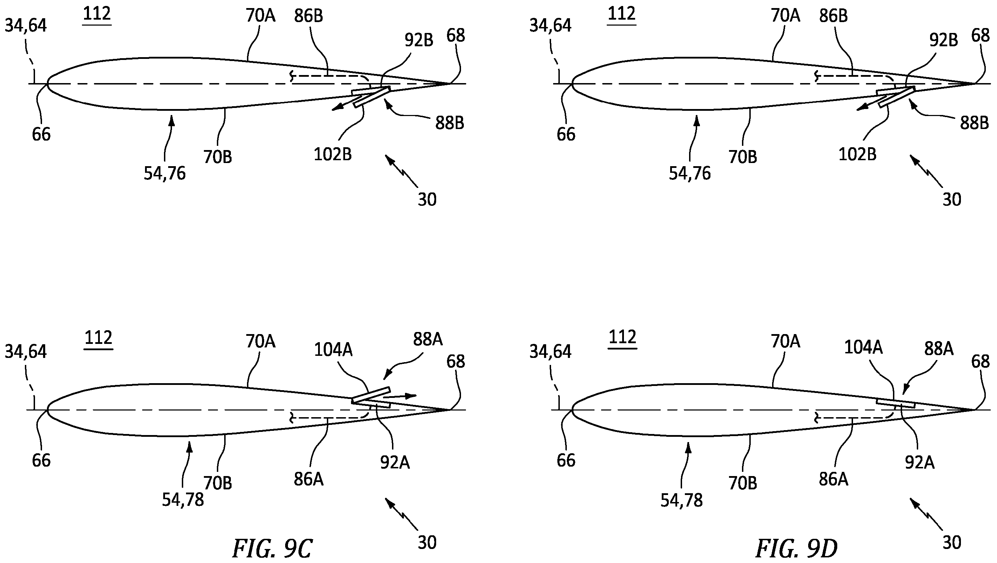

Referring to FIG. 9C, during a second (e.g., port, left side) yaw mode of operation, the inner door 104A of the first door assembly 88A may be moved to its open position (see also FIG. 8B) and the outer door 102B of the second door assembly 88B may be moved to its open position (see also FIG. 8A). Here, the air exhausted from the second circuit outlet 92B is forward, upstream of the air exhausted from the first circuit outlet 92A. The air exhausted from the second circuit outlet 92B therefore initially may flow along a portion of the vane 54 with a greater lateral thickness than the air exhausted from the first circuit outlet 92A. Moreover, the air exhausted from the second circuit outlet 92B is (at least initially) directed in the forward, upstream direction by the second door assembly 88B and the air exhausted from the first circuit outlet 92A is directed in the aft, downstream direction (e.g., generally along the vane first side 70A) by the first door assembly 88A. With this arrangement, the air exhausted from the second circuit outlet 92B may push air within the external environment 112 further laterally away from the vane 54 than the air exhausted from the first circuit outlet 92A. The air exhausted from the second circuit outlet 92B may thereby increase an effective camber of the inner portion 76 of the vane 54. This increase in the effective camber may generate additional lift to the first lateral direction such that the aircraft 20 yaws to the port; e.g., without use of a traditional physical rudder. In some embodiments, referring to FIG. 9D, this effect may be increased by moving the first door assembly 88A to its closed position (see also FIG. 8C).

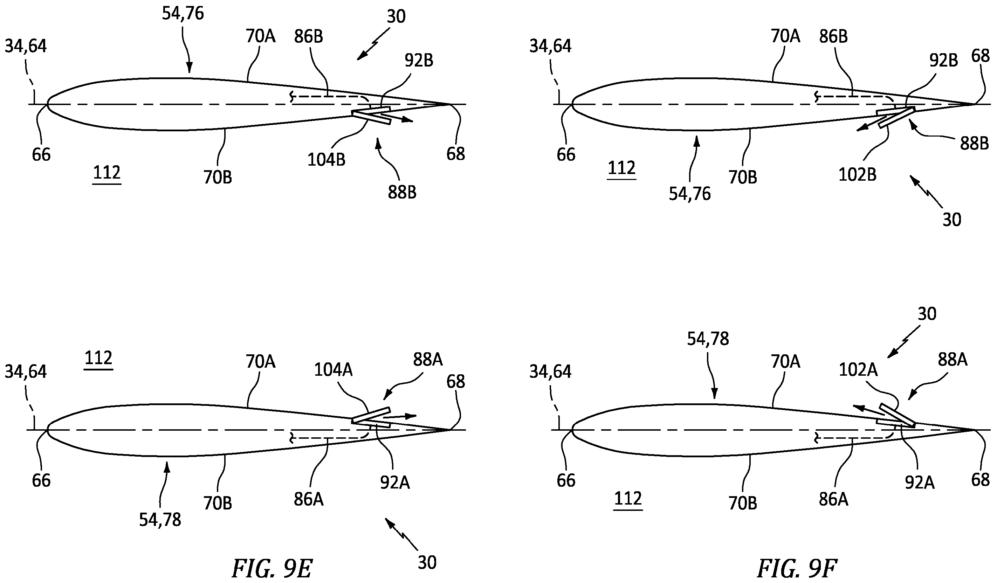

Referring to FIG. 9E, during another mode of operation, the inner door 104A of the first door assembly 88A and the inner door 104B of the second door assembly 88B may each be moved to their open positions (see also FIG. 8B). With this arrangement, the open door assemblies 88 facilitate removal of boundary layer air in front of the propulsion system airflow inlets 100 (see FIG. 1) without generating a yaw force. Moreover, by directing the air exhausted from the first circuit outlet 92A and the second circuit outlet 92B in the aft, downstream direction, this exhaust air may have minimal affect on aircraft drag. By contrast, referring to FIG. 9F, the outer door 102A of the first door assembly 88A and the outer door 102B of the second door assembly 88B may alternatively be moved to their open positions (see also FIG. 8A). With this arrangement, the open door assemblies 88 still facilitate removal of boundary layer air while also increasing aircraft drag. The air system, for example, may be operated in the mode of operation of FIG. 9F to decrease aircraft speed.

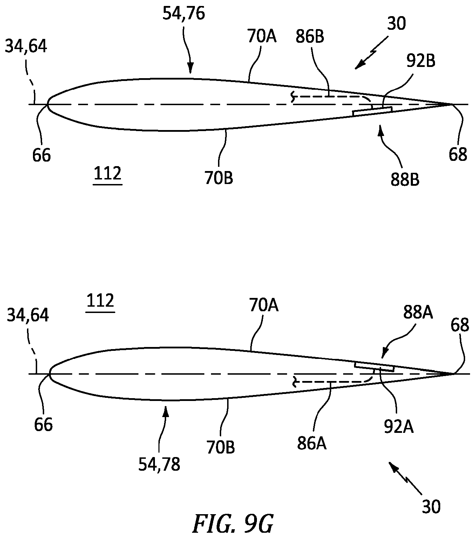

Referring to FIG. 9G, during still another mode of operation, the first door assembly 88A and the second door assembly 88B may both be closed (see also FIG. 8C). With this arrangement, aircraft drag may be further reduced. However, the propulsion system airflow inlets 100 of FIG. 1 may receive the boundary layer air that is otherwise removed through the circuit inlets 90 during the operating modes of FIGS. 9A-F.

In some embodiments, the vertical stabilizer 30 and its vane 54 may be utilized for lightning strike protection. The vertical stabilizer 30 and its vane 54 may also or alternatively be utilized to increase a radar signature of the aircraft 20 where that aircraft 20 is used for civilian aviation.

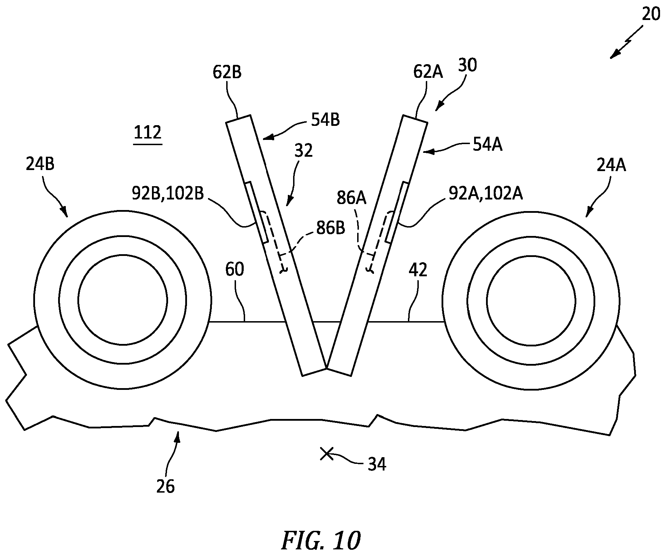

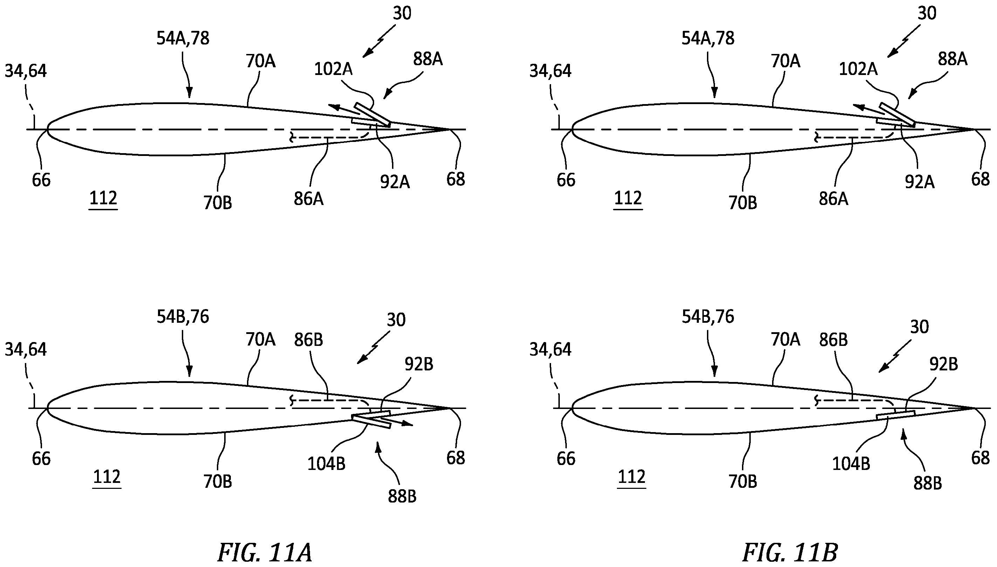

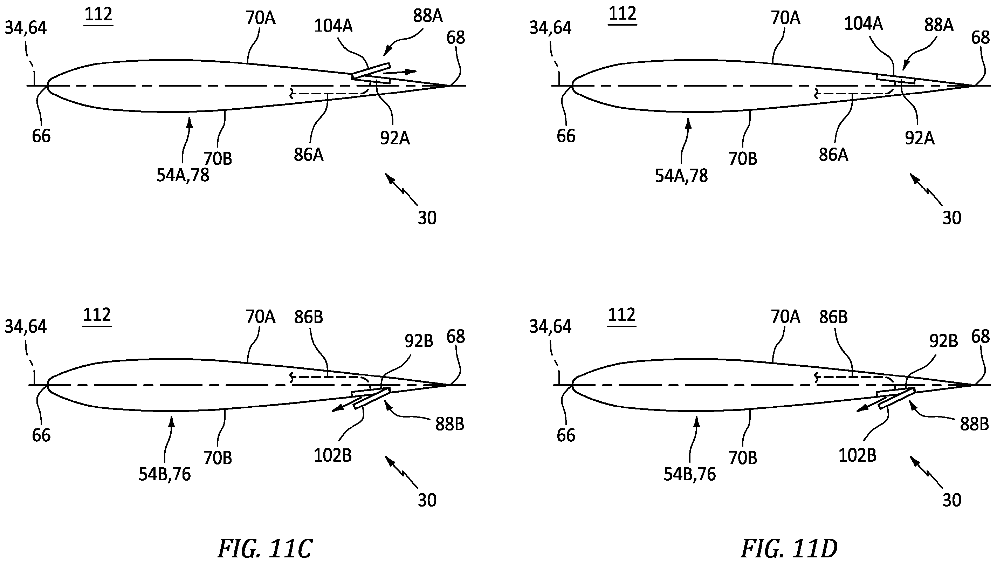

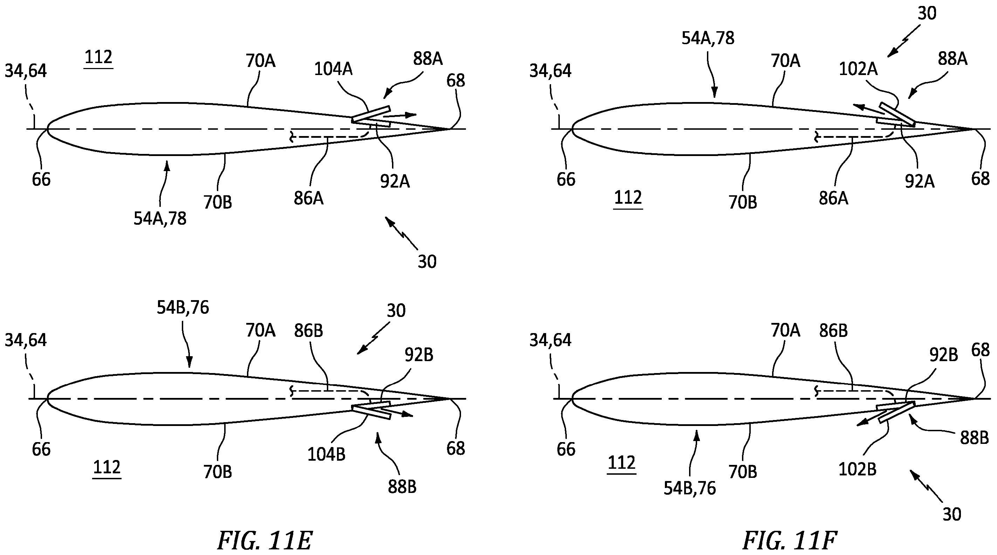

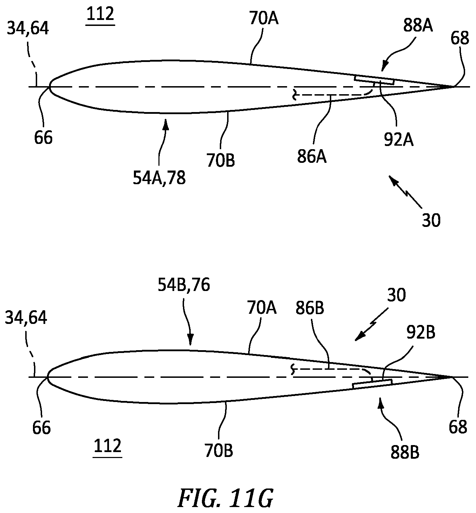

The vertical stabilizer 30 is described above with a single vane 54. The present invention, however, is not limited to such an exemplary arrangement. For example, referring to FIG. 10, the vertical stabilizer 30 may alternatively include multiple vanes 54A and 54B (generally referred to as "54"). Each vane 54A, 54B of FIG. 10 is connected to the aircraft body 26, and may project spanwise out from the aircraft body 26 to its respective vane tip 62A, 62B (generally referred to as "62"). The first vane 54A may be configured with the first air circuit and its first circuit outlet. The second vane 54B may be configured with the second air circuit and its second circuit outlet. Like described above with respect to FIGS. 9A-G, the air system 32 may be operated in various modes of operation, some of which operating modes are schematically exemplified in FIGS. 11A-11G. FIG. 11A illustrates a first (e.g., starboard, right side) yaw mode of operation similar to that of FIG. 9A described above. FIG. 11B illustrates another (e.g., starboard, right side) yaw mode of operation similar to that of FIG. 9B described above. FIG. 11C illustrates a second (e.g., port, left side) yaw mode of operation similar to that of FIG. 9C described above. FIG. 11D illustrates another (e.g., port, left side) yaw mode of operation similar to that of FIG. 9D described above. FIG. 11E illustrates another mode of operation similar to that of FIG. 9E described above. FIG. 11F illustrates another mode of operation similar to that of FIG. 9F described above. FIG. 11G illustrates still another mode of operation similar to that of FIG. 9G described above.

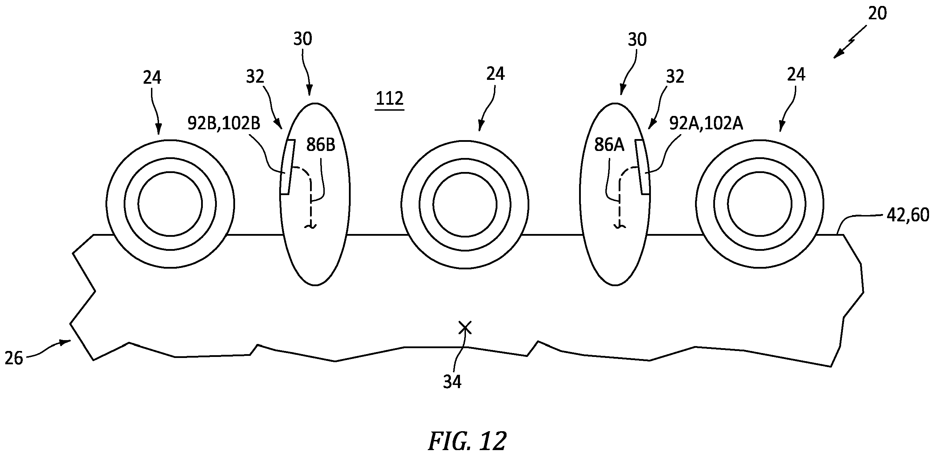

In some embodiments, referring to FIGS. 3 and 10, the aircraft 20 may be configured with a single vertical stabilizer 30. In other embodiments, referring to FIG. 12, the aircraft 20 may be configured with multiple of the vertical stabilizers 30, where each vertical stabilizer 30 is arranged laterally between a respective laterally neighboring pair of the aircraft propulsion systems 24. Here, the air system 32 may be operated in various modes of operation similar to that described above and illustrated in FIGS. 11A-11G.

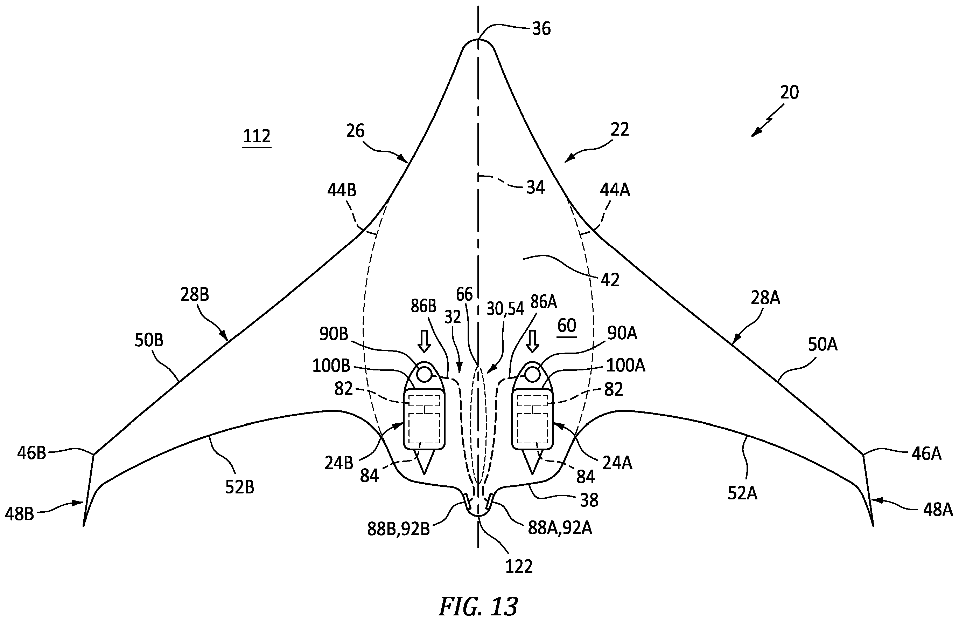

While the air system 32 of FIG. 1 is described above as being configured with both the aircraft body 26 and the vertical stabilizer 30 (or multiple vertical stabilizers 30), the present invention is not limited to such exemplary arrangements. It is contemplated, for example, the air system 32 may be configured discrete from the vertical stabilizer 30 (or multiple vertical stabilizers 30. The aircraft body 26 of FIG. 13, for example, is configured with a protrusion 122 (e.g., a tail) which projects longitudinally out from a base of the aircraft body 26 at the body aft end 38. Here, the first door assembly 88A and the associated first circuit outlet 92A are disposed on a first side of the protrusion 122. The second door assembly 88B and the associated second circuit outlet 92B are disposed on a second side of the protrusion 122 laterally opposite the first side. With this arrangement, it is contemplated the aircraft airframe 22 may be configured with at least one vertical stabilizer 30 (see dashed line) or with no vertical stabilizer.

While various embodiments of the present invention have been described, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims.

## Claims

1. A system for an aircraft (20), comprising:
a vane (54) extending spanwise from a base (72) to a tip (62), the vane (54) extending longitudinally from a leading edge (66) to a trailing edge (68), and the vane (54) extending laterally between a first side (70A) and a second side (70B); and
an air system (32) including a first air circuit (86A) and a first door assembly (88A), the first air circuit (86A) extending in the vane (54) to a first circuit outlet (92A) at the first side (70A), and the first door assembly (88A) arranged at the first circuit outlet (92A);
the air system (32) configured to exhaust a flow of air out of the first air circuit (86A) through the first circuit outlet (92A) during a first mode of operation and a second mode of operation, and the first door assembly (88A) configured to direct the flow of air exhausted from the first circuit outlet (92A) longitudinally towards the trailing edge (68) during the second mode of operation,
**characterised in that**:
the first door assembly (88A) is configured to direct the flow of air exhausted from the first circuit outlet (92A) longitudinally towards the leading edge (66) during the first mode of operation.

2. The system of claim 1, wherein the first door assembly (88A) is configured to block the first circuit outlet (92A) during a third mode of operation.

3. The system of claim 1 or 2, wherein:
the first door assembly (88A) comprises a first door (102A) extending longitudinally along the first side (70A) between an upstream end (106) and a downstream end (108);
the first door (102A) is configured to laterally displace the upstream end (106) from the first side (70A) during the first mode of operation; and
the first door (102A) is configured to laterally displace the downstream end (108) from the first side (70A) during the second mode of operation.

4. The system of any preceding claim, wherein:
the first door assembly (88A) comprises a or the first door (102A);
the first door (102A) is configured to pivot about a first axis (110) to enter the first mode of operation; and
the first door (102A) is configured to pivot about a second axis (120) to enter the second mode of operation, and the second axis (120) is upstream of the first axis (110) longitudinally along the first side (70A).

5. The system of any preceding claim, wherein the first door assembly (88A) is disposed longitudinally along the first side (70A) closer to the trailing edge (68) than the leading edge (66).

6. The system of any preceding claim, further comprising:
an airframe (22) including a body (26) and the vane (54) connected to the body (26) at the base (72) of the vane (54);
the first air circuit (86A) extending within the airframe (22) from a first circuit inlet (90A) to the first circuit outlet (92A), and the first circuit inlet (90A) arranged with the body (26).

7. The system of claim 6, wherein the first circuit inlet (90A) is laterally offset from the vane (54).

8. The system of claim 6 or 7, wherein the body (26) is configured as a blended wing body.

9. The system of any of claims 6 to 8, further comprising:
a first powerplant (84) comprising a powerplant inlet (100A) and connected to the body (26); and
the circuit inlet (90A) disposed upstream of and laterally overlapping the powerplant inlet (100A).

10. The system of claim 9, wherein the first powerplant (84) is configured as a propulsion system for the aircraft (20).

11. The system of claim 9 or 10, further comprising:
a second powerplant (84) connected to the body (26); and
the vane (54) longitudinally overlapping and disposed laterally between the first powerplant (84) and the second powerplant (84).

12. The system of any preceding claim, wherein:
the air system (32) further includes a second air circuit (86B) and a second door assembly (88B);
the second air circuit (86B) extends in the vane (54) to a second circuit outlet (92B) at the second side;
the second door assembly (88B) arranged at the second circuit outlet (92B); and
the air system (32) is configured to exhaust a second flow of air out of the second air circuit (86B) through the second circuit outlet (92B) during the first mode of operation and the second mode of operation, the second door assembly (88B) is configured to direct the second flow of air exhausted from the second circuit outlet (92B) longitudinally towards the trailing edge (68) during the first mode of operation, and the second door assembly (88B) is configured to direct the second flow of air exhausted from the second circuit outlet (92B) longitudinally towards the leading edge (66) during the second mode of operation.

13. The system of claim 12, wherein:
the second door assembly (88B) is spanwise offset from the first door assembly (88A) along the vane (54); and/or
the second door assembly (88B) is longitudinally aligned with the first door assembly (88A) along the vane (54).

14. The system of claim 12 or 13, wherein, during a third mode of operation, the first door assembly (88A) is configured to close the first circuit outlet (92A) and the second door assembly (88B) is configured to close the second circuit outlet (92B).

15. The system of any of claims 12 to 14, wherein:
the air system (32) is further configured to exhaust the flow of air out of the first air circuit (86A) through the first circuit outlet (92A) during a third mode of operation, and the first door assembly (88A) is configured to direct the flow of air exhausted from the first circuit outlet (92A) longitudinally towards either the leading edge (66) or the trailing edge (68) during the third mode of operation; and
the air system (32) is further configured to exhaust the second flow of air out of the second air circuit (86B) through the second circuit outlet (92B) during the third mode of operation, and the second door assembly (88B) is configured to direct the second flow of air exhausted from the second circuit outlet (92B) longitudinally towards the other of the leading edge (66) or the trailing edge (68) during the third mode of operation.

## Patentansprüche

1. System für ein Luftfahrzeug (20), umfassend:
eine Leitfläche (54), die sich in Spannweitenrichtung von einer Basis (72) zu einer Spitze (62) erstreckt, wobei die Leitfläche (54) sich in Längsrichtung von einer Vorderkante (66) zu einer Hinterkante (68) erstreckt und die Leitfläche (54) sich lateral zwischen einer ersten Seite (70A) und einer zweiten Seite (70B) erstreckt; und
ein Luftsystem (32), das einen ersten Luftkreislauf (86A) und eine erste Türanordnung (88A) einschließt, wobei der erste Luftkreislauf (86A) sich in der Leitfläche (54) zu einem ersten Kreislaufauslass (92A) an der ersten Seite (70A) erstreckt und die erste Türanordnung (88A) an dem ersten Kreislaufauslass (92A) angeordnet ist;
wobei das Luftsystem (32) dazu konfiguriert ist, während eines ersten Betriebsmodus und eines zweiten Betriebsmodus einen Luftstrom aus dem ersten Luftkreislauf (86A) durch den ersten Kreislaufauslass (92A) auszustoßen, und die erste Türanordnung (88A) dazu konfiguriert ist, den aus dem ersten Kreislaufauslass (92A) ausgestoßenen Luftstrom während des zweiten Betriebsmodus in Längsrichtung in Richtung der Hinterkante (68) zu leiten,
**dadurch gekennzeichnet, dass**:
die erste Türanordnung (88A) dazu konfiguriert ist, den aus dem ersten Kreislaufauslass (92A) ausgestoßenen Luftstrom während des ersten Betriebsmodus in Längsrichtung in Richtung der Vorderkante (66) zu leiten.

2. System nach Anspruch 1, wobei die erste Türanordnung (88A) dazu konfiguriert ist, den ersten Kreislaufauslass (92A) während eines dritten Betriebsmodus zu blockieren.

3. System nach Anspruch 1 oder 2, wobei:
die erste Türanordnung (88A) eine erste Tür (102A) umfasst, die sich in Längsrichtung entlang der ersten Seite (70A) zwischen einem stromaufwärtigen Ende (106) und einem stromabwärtigen Ende (108) erstreckt;
die erste Tür (102A) dazu konfiguriert ist, das stromaufwärtige Ende (106) während des ersten Betriebsmodus lateral von der ersten Seite (70A) zu verschieben; und
die erste Tür (102A) dazu konfiguriert ist, das stromabwärtige Ende (108) während des zweiten Betriebsmodus lateral von der ersten Seite (70A) zu verschieben.

4. System nach einem der vorhergehenden Ansprüche, wobei:
die erste Türanordnung (88A) eine oder die erste Tür (102A) umfasst;
die erste Tür (102A) dazu konfiguriert ist, um eine erste Achse (110) zu schwenken, um in den ersten Betriebsmodus einzutreten; und
die erste Tür (102A) dazu konfiguriert ist, um eine zweite Achse (120) zu schwenken, um in den zweiten Betriebsmodus einzutreten, und die zweite Achse (120) sich in Längsrichtung entlang der ersten Seite (70A) stromaufwärts der ersten Achse (110) befindet.

5. System nach einem der vorhergehenden Ansprüche, wobei die erste Türanordnung (88A) in Längsrichtung entlang der ersten Seite (70A) näher an der Hinterkante (68) als an der Vorderkante (66) eingerichtet ist.

6. System nach einem der vorhergehenden Ansprüche, ferner umfassend:
eine Flugzeugzelle (22), die einen Körper (26) und die Leitfläche (54), die an der Basis (72) der Leitfläche (54) mit dem Körper (26) verbunden ist, einschließt;
wobei der erste Luftkreislauf (86A) sich innerhalb der Flugzeugzelle (22) von einem ersten Kreislaufeinlass (90A) zu dem ersten Kreislaufauslass (92A) erstreckt und der erste Kreislaufeinlass (90A) an dem Körper (26) angeordnet ist.

7. System nach Anspruch 6, wobei der erste Kreislaufeinlass (90A) lateral von der Leitfläche (54) versetzt ist.

8. System nach Anspruch 6 oder 7, wobei der Körper (26) als ein Nurflügler konfiguriert ist.

9. System nach einem der Ansprüche 6 bis 8, ferner umfassend:
ein erstes Triebwerk (84), das einen Triebwerkseinlass (100A) umfasst und mit dem Körper (26) verbunden ist; und
wobei der Kreislaufeinlass (90A) stromaufwärts des Triebwerkseinlasses (100A) eingerichtet ist und diesen lateral überlappt.

10. System nach Anspruch 9, wobei das erste Triebwerk (84) als ein Antriebssystem für das Luftfahrzeug (20) konfiguriert ist.

11. System nach Anspruch 9 oder 10, ferner umfassend:
ein zweites Triebwerk (84), das mit dem Körper (26) verbunden ist; und
wobei die Leitfläche (54) das erste Triebwerk (84) und das zweite Triebwerk (84) in Längsrichtung überlappt und lateral zwischen diesen eingerichtet ist.

12. System nach einem der vorhergehenden Ansprüche, wobei:
das Luftsystem (32) ferner einen zweiten Luftkreislauf (86B) und eine zweite Türanordnung (88B) einschließt;
der zweite Luftkreislauf (86B) sich in der Leitfläche (54) zu einem zweiten Kreislaufauslass (92B) an der zweiten Seite erstreckt;
die zweite Türanordnung (88B) an dem zweiten Kreislaufauslass (92B) angeordnet ist; und
das Luftsystem (32) dazu konfiguriert ist, während des ersten Betriebsmodus und des zweiten Betriebsmodus einen zweiten Luftstrom aus dem zweiten Luftkreislauf (86B) durch den zweiten Kreislaufauslass (92B) auszustoßen, die zweite Türanordnung (88B) dazu konfiguriert ist, den aus dem zweiten Kreislaufauslass (92B) ausgestoßenen zweiten Luftstrom während des ersten Betriebsmodus in Längsrichtung in Richtung der Hinterkante (68) zu leiten, und die zweite Türanordnung (88B) dazu konfiguriert ist, den aus dem zweiten Kreislaufauslass (92B) ausgestoßenen zweiten Luftstrom während des zweiten Betriebsmodus in Längsrichtung in Richtung der Vorderkante (66) zu leiten.

13. System nach Anspruch 12, wobei:
die zweite Türanordnung (88B) in Spannweitenrichtung von der ersten Türanordnung (88A) entlang der Leitfläche (54) versetzt ist; und/oder
die zweite Türanordnung (88B) in Längsrichtung mit der ersten Türanordnung (88A) entlang der Leitfläche (54) fluchtet.

14. System nach Anspruch 12 oder 13, wobei während eines dritten Betriebsmodus die erste Türanordnung (88A) dazu konfiguriert ist, den ersten Kreislaufauslass (92A) zu schließen, und die zweite Türanordnung (88B) dazu konfiguriert ist, den zweiten Kreislaufauslass (92B) zu schließen.

15. System nach einem der Ansprüche 12 bis 14, wobei:
das Luftsystem (32) ferner dazu konfiguriert ist, während eines dritten Betriebsmodus den Luftstrom aus dem ersten Luftkreislauf (86A) durch den ersten Kreislaufauslass (92A) auszustoßen, und die erste Türanordnung (88A) dazu konfiguriert ist, den aus dem ersten Kreislaufauslass (92A) ausgestoßenen Luftstrom während des dritten Betriebsmodus in Längsrichtung entweder in Richtung der Vorderkante (66) oder der Hinterkante (68) zu leiten; und
das Luftsystem (32) ferner dazu konfiguriert ist, während des dritten Betriebsmodus den zweiten Luftstrom aus dem zweiten Luftkreislauf (86B) durch den zweiten Kreislaufauslass (92B) auszustoßen, und die zweite Türanordnung (88B) dazu konfiguriert ist, den aus dem zweiten Kreislaufauslass (92B) ausgestoßenen zweiten Luftstrom während des dritten Betriebsmodus in Längsrichtung in Richtung der anderen von der Vorderkante (66) oder der Hinterkante (68) zu leiten.

## Revendications

1. Système pour un aéronef (20), comprenant :
une ailette (54) s'étendant dans le sens de l'envergure d'une base (72) à une extrémité (62), l'ailette (54) s'étendant longitudinalement d'un bord d'attaque (66) à un bord de fuite (68), et l'ailette (54) s'étendant latéralement entre un premier côté (70A) et un second côté (70B) ; et
un système d'air (32) comportant un premier circuit d'air (86A) et un premier ensemble de porte (88A), le premier circuit d'air (86A) s'étendant dans l'ailette (54) jusqu'à une première sortie de circuit (92A) du premier côté (70A), et le premier ensemble de porte (88A) disposé à la première sortie de circuit (92A) ;
le système d'air (32) configuré pour évacuer un flux d'air du premier circuit d'air (86A) par la première sortie de circuit (92A) pendant un premier mode de fonctionnement et un deuxième mode de fonctionnement, et le premier ensemble de porte (88A) configuré pour diriger le flux d'air évacué de la première sortie de circuit (92A) longitudinalement vers le bord de fuite (68) pendant le deuxième mode de fonctionnement,
**caractérisé en ce que** :
le premier ensemble de porte (88A) est configuré pour diriger le flux d'air évacué de la première sortie de circuit (92A) longitudinalement vers le bord d'attaque (66) pendant le premier mode de fonctionnement.

2. Système selon la revendication 1, dans lequel le premier ensemble de porte (88A) est configuré pour bloquer la première sortie de circuit (92A) pendant un troisième mode de fonctionnement.

3. Système selon la revendication 1 ou 2, dans lequel :
le premier ensemble de porte (88A) comprend une première porte (102A) s'étendant longitudinalement le long du premier côté (70A) entre une extrémité amont (106) et une extrémité aval (108) ;
la première porte (102A) est configurée pour déplacer latéralement l'extrémité amont (106) par rapport au premier côté (70A) pendant le premier mode de fonctionnement ; et
la première porte (102A) est configurée pour déplacer latéralement l'extrémité aval (108) par rapport au premier côté (70A) pendant le deuxième mode de fonctionnement .

4. Système selon une quelconque revendication précédente, dans lequel :
le premier ensemble de porte (88A) comprend une ou la première porte (102A) ;
la première porte (102A) est configurée pour pivoter autour d'un premier axe (110) afin d'entrer dans le premier mode de fonctionnement ; et
la première porte (102A) est configurée pour pivoter autour d'un second axe (120) pour entrer dans le deuxième mode de fonctionnement, et le second axe (120) est en amont du premier axe (110) longitudinalement le long du premier côté (70A).

5. Système selon une quelconque revendication précédente, dans lequel le premier ensemble de porte (88A) est disposé longitudinalement le long du premier côté (70A) plus près du bord de fuite (68) que du bord d'attaque (66).

6. Système selon une quelconque revendication précédente, comprenant en outre :
une cellule (22) comportant un corps (26) et l'ailette (54) reliée au corps (26) à la base (72) de l'ailette (54) ;
le premier circuit d'air (86A) s'étendant à l'intérieur de la cellule (22) d'une entrée de premier circuit (90A) à la sortie du premier circuit (92A), et l'entrée de premier circuit (90A) disposée avec le corps (26).

7. Système selon la revendication 6, dans lequel la première entrée de circuit (90A) est décalée latéralement par rapport à l'ailette (54).

8. Système selon la revendication 6 ou 7, dans lequel le corps (26) est configuré comme un fuselage à aile intégrée.

9. Système selon l'une quelconque des revendications 6 à 8, comprenant en outre :
une première centrale électrique (84) comprenant une entrée de centrale électrique (100A) et reliée au corps (26) ; et
l'entrée du circuit (90A) disposée en amont et chevauchant latéralement l'entrée de centrale électrique (100A).

10. Système selon la revendication 9, dans lequel la première centrale électrique (84) est configurée comme un système de propulsion pour l'aéronef (20).

11. Système selon la revendication 9 ou 10, comprenant en outre :
une seconde centrale électrique (84) reliée au corps (26) ; et
l'ailette (54) chevauchant longitudinalement et disposée latéralement entre la première centrale électrique (84) et la seconde centrale électrique (84).

12. Système selon une quelconque revendication précédente, dans lequel :
le système d'air (32) comporte en outre un second circuit d'air (86B) et un second ensemble de porte (88B) ;
le second circuit d'air (86B) s'étend dans l'ailette (54) jusqu'à une seconde sortie de circuit (92B) du second côté ;
le second ensemble de porte (88B) disposé au niveau de la seconde sortie de circuit (92B) ; et
le système d'air (32) est configuré pour évacuer un second flux d'air du second circuit d'air (86B) par la sortie du second circuit (92B) pendant le premier mode de fonctionnement et le deuxième mode de fonctionnement, le second ensemble de porte (88B) est configuré pour diriger le second flux d'air évacué de la sortie du second circuit (92B) longitudinalement vers le bord de fuite (68) pendant le premier mode de fonctionnement, et le second ensemble de porte (88B) est configuré pour diriger le second flux d'air évacué de la sortie du second circuit (92B) longitudinalement vers le bord d'attaque (66) pendant le deuxième mode de fonctionnement.

13. Système selon la revendication 12, dans lequel :
le second ensemble de porte (88B) est décalé dans le sens de l'envergure par rapport au premier ensemble de porte (88A) le long de l'ailette (54) ; et/ou
le second ensemble de porte (88B) est aligné longitudinalement avec le premier ensemble de porte (88A) le long de l'ailette (54).

14. Système selon la revendication 12 ou 13, dans lequel, pendant un troisième mode de fonctionnement, le premier ensemble de porte (88A) est configuré pour fermer la première sortie de circuit (92A) et le second ensemble de porte (88B) est configuré pour fermer la seconde sortie de circuit (92B).

15. Système selon l'une quelconque des revendications 12 à 14, dans lequel :
le système d'air (32) est en outre configuré pour évacuer le flux d'air du premier circuit d'air (86A) par la première sortie de circuit (92A) pendant un troisième mode de fonctionnement, et le premier ensemble de porte (88A) est configuré pour diriger le flux d'air évacué de la première sortie de circuit (92A) longitudinalement vers le bord d'attaque (66) ou le bord de fuite (68) pendant le troisième mode de fonctionnement ; et
le système d'air (32) est en outre configuré pour évacuer le second flux d'air du second circuit d'air (86B) par la sortie du second circuit (92B) pendant le troisième mode de fonctionnement, et le second ensemble de porte (88B) est configuré pour diriger le second flux d'air évacué de la sortie du second circuit (92B) longitudinalement vers l'autre bord d'attaque (66) ou le bord de fuite (68) pendant le troisième mode de fonctionnement.
